# EUROPÄISCHE PATENTSCHRIFT

(11) **EP 0 441 751 B1**
(45) Veröffentlichungstag und Bekanntmachung des Hinweises auf die Patenterteilung: **26.01.1994**
(21) Anmeldenummer: 91810080.1
(22) Anmeldetag: 05.02.1991
(51) Int. Cl.: F16L 37/24, F16B 35/04

(54) **Kupplung zum Verbinden von Bauelementen**
Coupling for the connection of construction elements
Raccord pour la connexion entre éléments de construction

(30) Priorität: 05.02.1990 CH 366/90
(43) Veröffentlichungstag der Anmeldung: 14.08.1991
(73) Patentinhaber: Jaggi, Claude, CH-2500 Biel (CH)
(72) Erfinder: Jaggi, Claude, CH-2500 Biel (CH)
(74) Vertreter: Keller, René, Dr.

(56) Entgegenhaltungen:
- US-A- 1 470 209
- US-A- 2 695 797

## Beschreibung

Die Erfindung betrifft eine kupplung zum Verbinden von Bauteilen gemäß dem Oberbegriff des Patentanspruchs 1.

Aus der US-PS 2,695,797 ist eine kupplung dieser Art zum Verbinden von Bauelementen mit zwei ineinandersteckbaren und durch eine Teilumdrehung formschlüssig miteinander verbindbaren kupplungsgliedern bekannt. Bei der bekannten kupplung hat das eine kupplungsglied eine Gewindebuchse und das andere kupplungsglied einen Gewindestecker. Gewindebuchse und -stecker haben gewindefreie Bereiche in Gewindelängsrichtung, die derart angeordnet sind, das der Gewindestecker in die Gewindebuchse steckbar und durch eine Teilumdrehung mit diesem verbindbar ist. Die beiden kupplungsglieder werden nach den Verschließen mit zwei schwenkbaren Bügeln, die nach dem Umschwenken in je einen Sicherungsstift greifen, gegen Aufdrehen gesichert.

Das Gegeneinanderverdrehen der beiden zusammengesteckten Kupplungsglieder ist nur mit einigen "gefühlvollen" Hin- und Herbewegungen möglich, wodurch - ein schnelles Verbinden der beiden Kupplungsglieder nicht mehr gewährleistet ist.

Mit den in den Ansprüchen 1 bis 11 beschriebenen Ausführungen der Erfindung werden einfach und preisgünstig herzustellende Kupplugen geschaffen, deren zwei Kupplungsglieder sich schnell und einfach miteinander verbinden lassen.

Im folgenden werden Beispiele der Erfindung anhand von Zeichnungen näher erläutert. Es zeigen:
- Fig. 1: eine Kupplung zum Verbinden zweier Fluidleitungen mit zwei je an eine Fluidleitung angeschlossenen Kupplungsgliedern in einer zum Zusammenstecken geeigneten Lage,
- Fig. 2: einen Querschnitt durch die Kupplung im fluiddichten Zustand mit den zwei gegeneinander um eine Teilumdrehung verdrehten Kupplungsgliedern,
- Fig. 3: einen Querschnitt durch die beiden Kupplungsglieder im fluiddichten Zustand der Kupplung entlang der Schnittebene III - III in **Figur 2**,
- Fig. 4: einen Querschnitt durch die beiden zusammengesteckten Kupplungsglieder im nicht fluiddichten Zustand am Ort der Schnittebene III - III in **Figur** **2**,
- Fig. 5: eine Draufsicht auf eines der kupplungsglieder in Blickrichtung V in **Figur 1**,
- Fig. 6: einen Längsschnitt durch eine Variante einer Sicherung gegen selbsttätiges Aufdrehen zweier fluiddicht miteinander verbundener kupplungsglieder, und
- Fig. 7: einen Schnitt durch eine Variante einer kupplung zur Befestigung einer Abdeckung an einem Gehäuse.

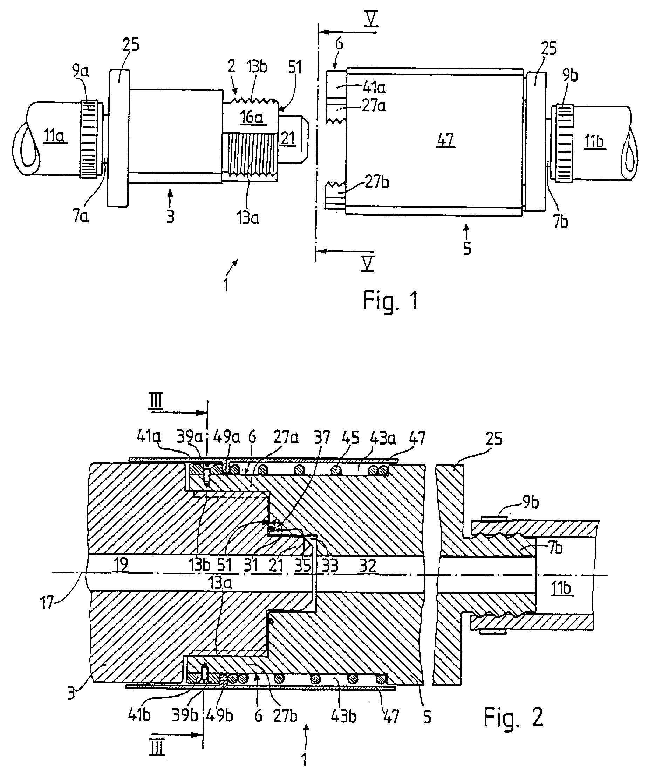

In **Figur 1** ist eine kupplung **1** im ausgekuppelten Zustand mit einem ersten kupplungsglied **3** mit einem Gewindestecker **2** und einem zweiten kupplungsglied **5** mit einem Umfangsteil **6** als Gewindebuchse dargestellt. Beide kupplungsglieder **3** und **5** haben jeweils einen Anschlußflansch **7a** und **7b**, an dem mit je einer Bride **9a** und **9b** je ein Schlauch **11a** und **11b** als Fluidleitung angeschlossen ist.

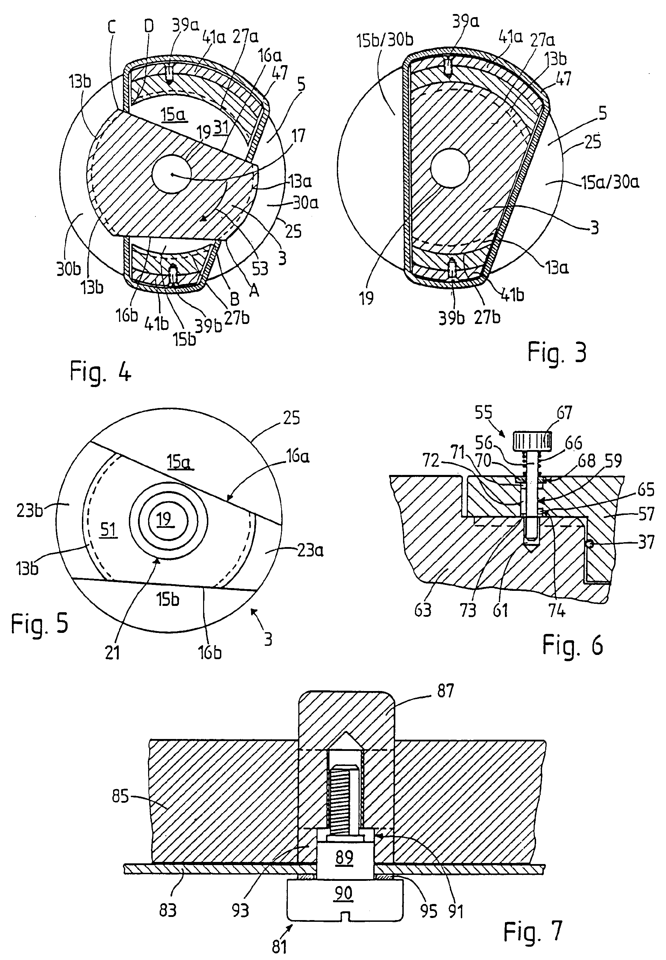

In **Figur 2** ist die fluiddicht geschlossene kupplung 1 im Längsschnitt und in **Figur 3** ein Querschnitt entlang der Schnittebene III - III in **Figur 2** dargestellt. In **Figur** **4** ist ein Querschnitt am Ort der Schnittebene III - III dargestellt, jedoch sind hier die beiden Kupplungsglieder **3** und **5** derart gegeneinander verdreht, daß diese auseinander- und ineinandersteckbar sind. Das kupplungsglied **5** befindet sich in den **Figuren** **3** und **4** in gleicher Lage, nur das kupplungsglied **3** ist in seiner in **Figur** **4** dargestellten Lage gegenüber derjenigen in **Figur** **3** um annähernd 90 ° verdreht.

Das kupplungsglied **3** hat ein Außengewinde bestehend aus zwei Außengewindebereichen **13a** und **13b**, welche durch zwei gewindefreie Außenmantellängsbereiche **15a** und **15b** unterbrochen sind. Die gewindefreien Bereiche **15a** und **15a** sind durch zwei eben gefräste Flächen **16a** und **16b**, zu denen die Achse **17** der kupplung **1** parallel verläuft, aus dem kern des Außengewindes herausgeschnitten. Das kupplungsglied **3** hat eine zentrische Durchgangsbohrung **19** für das durch den Schlauch **11a** heran- oder wegzuführende Fluid. Die Durchgangsbohrung **19** ist an der Vorderseite des kupplungsgliedes **3** vor den Außengewindebereichen **13a** und **13b** mit einem angefasten zur Durchgangsbohrung **19** koaxialen Ansatz **21** versehen. Der Radius des Ansatzes **21** ist kleiner als der kleinste Abstand der Flächen **16a** und **16b** von der Achse **17**. Auf der anderen Seite der gewindefreien Bereiche **15a** und **15b** schließt, wie insbesondere in**Figur 5** dargestellt ist, je ein Absatz **23a** und **23b**, begrenzt durch die Flächen **16a** und **16b,** an die Gewindebereiche **15a** und **15b** an. Die Absätze **23a** und **23b** gehen in eine zur Achse **17** koaxiale Scheibe **25** über, an deren anderer Scheibenfläche der Anschlußflansch **7a** liegt.

Das kupplungsglied **5** hat, wie insbesondere in **Figur** **3** zu sehen ist, passend zu den Außengewindebereichen **13a** und **13b** einen mit zwei (gleiche Anzahl wie Außengewindebereiche **13a** und **13b**) Innengewindebereichen **27a** und **27b** versehenen Umfangsteil **6**. Die beiden Innengewindebereiche **27a** und **27b** sind durch segmentförmige gewindefreie Innenmantellängsbereiche **30a** und **30b** voneinander getrennt, wobei die Segmente derart ausgebildet sind, daß die Segmentflächen der gewindefreien Bereiche **15a** und **15b** des Steckerteil mit denen des Buchsenteils fluchten, um im zusammengesteckten Zustand der beiden Gewindeglieder **3** und **5** eine Überschieben der unten beschriebenen Hülse **47** zu ermöglichen. Das kupplungsglied **5** hat eine zentrische, in der Achse **17** verlaufende Durchgangsbohrung **32** für das durch den Schlauch **11b** heran- bzw. wegzuführende Fluid. Die Durchgangsbohrung **32** ist unterhalb des Gewindebodens **31** der Innengewindebereiche **27a** und **27b** zu einem zur Durchgangsbohrung **32** koaxialen Führungsbohrung **33** erweitert. Der Bohrlochdurchmesser ist als Spielpassung zum Ansatz **21** ausgebildet. Die Bohrlochtiefe ist um eine Toleranz größer als die Höhe des Ansatzes **21**. koaxial zur Achse **17** ist im Gewindeboden **31** eine Nut **35**, in der ein Dichtring **37** liegt, angeordnet; der Radius der Nut **35** ist kleiner als der kleinste Abstand der Flächen **16a** bzw. **16b** von der Achse **17**. Die Volumenelastizität des Dichtrings **37** ist im Zusammenhang mit der Gewindesteigung derart gewählt, daß, wie unten noch genauer ausgeführt, zwischen ungepreßtem und gepreßtem Zustand annähernd eine Viertelumdrehung zwischen dem kupplungsglied **3** und **5** ausreicht.

Die gewindefreien Bereiche **15a** und **15b** sowie **30a** und **30b** haben bis auf eine Toleranz gleichen, spiegelbildlichen Querschnitt, d. h. sie sind bis auf eine Toleranz deckungsgleich, wie in **Figur 3** dargestellt. Wie in **Figur 4** zu sehen ist, ist die Sehne des Außengewindebereichs **13a** geringfügig kleiner als die Sehne des gewindefreien Innengewindebereichs **30a,** die Sehne des Außengewindebereichs **13b** größer als die Sehne des gewindefreien Innengewindebereichs **30a**, aber geringfügig kleiner als die Sehne des gewindefreien Innengewindebereichs **30b**. Aufgrund dieser Anordnung im Zusammenhang mit dem durch die Führungsbohrung **33** geführten Ansatz **21**, können die beiden kupplungsglieder **3** und **5** nur in der in **Figur** **4** dargestellten gegenseitigen Lage zusammengesteckt werden.

Innen- und Außengewinde sind Gewinde gleichen Typs, gleicher Nennweite, gleicher Gängigkeit und gleicher Steigung und sind derart geschnitten, daß Gewindeein- und -auslauf derart angeordnet sind, daß die beiden kupplungsglieder **3** und 5 bei einer Teilumdrehung von der in **Figur** **4** in die in **Figur** **3** gezeigten Lage den Dichtring **37** derart zusammenpressen, daß eine fluiddichte Verbindung hergestellt ist.

Da der richtige Gewindeein- und -auslauf schwierig herstellbar ist, werden für die Herstellung der kupplung **1** zwei nicht dargestellte, zu den kupplungsgliedern **3** und **5** analoge kupplungsglieder verwendet, wobei der Stecker des einen kupplungsgliedes ein vollständiges Außengewinde und der Umfangsteil des anderen kupplungsgliedes ein vollständiges Innengewinde hat. Gewindefreie Bereich gibt es vorerst noch nicht. Der Dichtring **37** ist in die Nut **35** eingelegt. Die beiden nicht dargestellten kupplungsglieder werden fluiddicht zusammengeschraubt. Im zusammengeschraubten Zustand werden beide kupplungsglieder derart abgefräst bis die Flächen **16a** und **16b** erreicht sind; die in **Figur** **3** dargestellte kontur der kupplungsglieder **3** und **5** ist hergestellt. Die beiden kupplungsglieder **3** und **5** sind somit mit richtigem Gewindeein- und -auslauf hergestellt.

Das kupplungsglied **5** hat, wie insbesondere in **Figur** **2** zu sehen ist, je einen mit einer Schraube **39a** bzw. **39b** an die Außenwand des Innengewindebereichs **30a** bzw. **30b** des Umfangsteils **6** angeschraubten Ringteil **41a** bzw. **41b**. Die Ringteile **41a** und **41b** haben eine nicht dargestellte Feder, welche in je einer der nicht dargestellten Nuten in dem an die Ringteile **41a** bzw. **41b** angrenzenden Bereich der Außenwand des Innengewindebereichs **30a** bzw. **30b** liegen. Durch die Nut und Feder und die Schraube **39a** bzw. **39b** sind die Ringteile **41a** und **41b** verschiebefest am Umfangsteil **6** befestigt.

An die Ringteile **41a** und **41b** anschließend liegt je eine koaxiale Vertiefung **43a** bzw. **43b** über die gesamte Breite der Außenwand der Innengewindebereiche **27a** und **27b**. In beiden Vertiefungen **43a** und **43b** liegt eine Druckfeder **45**, welche in **Figur** **2** an ihrem rechten Ende jeweils an der Vertiefungskante anliegt. Der Innenquerschnitt der Druckfeder **45** entspricht der Außenwand der Innengewindebereiche **27a** und **27b** sowie deren geradliniger Verbindung zwischen den Enden der Innengewindebereiche **27a** und **27b**.

Die Außenwand des Umfangsteil 6 wird von einer Hülse **47** umschlossen. Die Hülse **47** hat an ihren den Innengewindebereichen **27a** und **27b** benachbarten Bereichen je einen Absatz **49a** und **49b**, auf dem das andere Ende der Druckfeder **45** aufliegt. Die Länge der Hülse **47** und der Ort der Absätze **49a** und **49b** ist so ausgebildet, daß im zurückgeschobenen Zustand die Schrauben **39a** und **39b** sichtbar sind, wodurch eine einfache Montage der Ringteile **41a** und **41b** möglich ist und im vorgeschobenen Zustand der die Absätze **49a** und **49b** überragende Teil so groß ist, daß er die Absätze **23a** und **23b** des kupplungsgliedes **3** in ihrem vorderen Teil derart überdeckt, daß, wie unten beschrieben, eine einwandfreie Verdrehsicherung der beiden kupplungsglieder **3** und **5** gegeben ist. Durch die in den Figuren **3** und **4** dargestellten, teilweise nicht kreiszylindrischen, parallel zur kupplungsachse **17** verlaufenden, beiden Innenmantelbereichen der Hülse **47** ergibt sich die Verdrehsicherung der beiden kupplungsglieder **3** und **5**. Der an der anderen Seite der Absätze **49a** und **49b** liegende Teil der Hülse **47** ist so lang ausgebildet, daß er die Einstiche **43a** und **43b** im durch die Druckfeder **45** vorgeschobenen Zustand überdeckt. Die Hülse **47** wird aus einem Blechteil mit angeschweißten Absätzen **49a** und **49b** gefertigt, anschließend in die in der **Figuren** **3** und **4** dargestellte Form gebogen und stumpf zusammengeschweißt.

Zum fluiddichten Verbinden zweier kupplungsglieder **3** und **5** werden diese in die in **Figur** **4** gezeigte Lage gedreht, die Hülse **47** nach hinten geschoben und die beiden kupplungsglieder **3** und **5** ineinandergesteckt, wobei sie in ihrem letzten Teil des Zusammensteckweges durch den in der Führungsbohrung **33** gleitenden Ansatz **21** geführt werden bis die Gewindestirnfläche **51** am Dichtring **37** als Anschlag anstößt. Die Gewindezähne des Außengewindebereichs **13a** stehen nun (siehe **Figur** **4**) an der kante **A** auf gleicher Höhe wie die Gewindetäler des Innengewindebereichs **27b** an der kante **B**; analoges gilt für die Gewindezähne des Außengewindebereiches **13b** an der kante **C** und die Gewindetäler des Innengewindebereiches **27a** an der kante **D**. Das kupplungsglied **3** wird gegenüber dem kupplungsglied **5** bei vorhandenem Rechtsgewinde von Innen- und Außengewinde in die in **Figur** **4** gezeigte Richtung **53** gedreht bis die Innen- und Außengewindebereiche **27a** und **13a** sowie **27b** und **13b** vollständig ineinandergreifen. Die Hülse **47** wird losgelassen, wodurch diese durch die Druckfeder **45** über den vorderen Teil des kupplungsgliedes **5** geschoben wird. Da die Hülse **47**, wie in **Figur** **3** dargestellt, sowohl dem Querschnitt des kupplungsgliedes **3** wie auch des kupplungsgliedes **5** angepaßt ist, verhindert die nach vorn gedrückte Hülse **47** ein selbsttätiges Auseinanderdrehen der beiden kupplungsglieder **3** und **5**.

Anstelle die Hülse **47** gegen selbsttätiges Auseinanderdrehen der beiden kupplungsglieder **3** und **5** zu verwenden, kann auch, wie in **Figur** **6** dargestellt, ein Verriegelungsstift **55** verwendet werden, dessen Bolzen **56** in einem kupplungsglied **57**, welches geringfügig gegenüber dem Kupplungsglied **5** abgeändert ist, in einer Durchgangsbohrung **59** geführt ist. Der Bolzen **56** greift mit Spielpassung in ein Sackloch **61** als passende Öffnung im kupplungsglied **63**, welches geringfügig gegenüber dem kupplungsglied **3** verändert ist. Der Bolzen **56** hat in seinem unteren Drittel einen radialen eingesetzten Stift **65**. Das aus dem kupplungsglied **57** herausstehende Ende des Verriegelungsstiftes **55** trägt einen kopf **67** als Griff. Zwischen dem kopf **67** und der Außenseite des kupplungsgliedes **57** ist eine Feder **66** angeordnet, deren Federkraft vom kupplungsglied **57** weg wirkt. Die Durchgangsbohrung **59** ist in ihrem äußeren Teil mit einer Gewindebohrung **68**, deren Durchmesser geringfügig größer als der Durchmesser der Durchgangsbohrung **59** ist, versehen. Der äußere Teil der Gewindebohrung **68** ist mit einer Gewindescheibe **70** verschlossen. Zwischen dem Boden der Gewindebohrung **68** und dem Boden der Gewindescheibe **70** verbleibt ein ringförmiger Zwischenraum **71**, der um eine Toleranz breiter ist als der Stift **65** dick ist. Von diesem Zwischenraum **71** aus verläuft eine Nut **72** im Mantel der Durchgangsbohrung **59** bis zu deren anderem Ende. Die Nut **72** ist um eine Toleranz breiter als der Stift **65**. Der Ausgang der Durchgangsbohrung **59** ist auf eine Bohrung **73** erweitert, deren Radius dem Abstand des Nutenboden von der Achse der Durchgangsbohrung **59** entspricht. Die Tiefe der Bohrung **73** entspricht der Dicke des Stiftes **65** plus eine Toleranz. Der Nut **72** liegt ausgehend von der Bohrung **73** eine Sacknut **74** gegenüber, deren Länge annähernd der Stiftdicke entspricht.

Sollen die beiden kupplungsglieder **57** und **63** zusammengesteckt werden, befindet sich der Verriegelungsstift **55** in seiner herausgezogenen Position, d. h. der Stift **65** liegt im Zwischenraum **71** verdreht gegenüber der Nut **72**. Sind die beiden kupplungsglieder **57** und **63** zusammengesteckt und fluiddicht verriegelt worden, so fluchtet die Durchgangsbohrung **59** mit dem Sackloch **61**. Der Verriegelungsstift **55** wird jetzt so weit verdreht bis sich der Stift **65** durch die Nut **72** eindrücken läßt. Stößt der Stift **65** beim Hineindrücken an der Oberfläche des kupplungsgliedes **63** an, wird er um einen kleinen Winkel verdreht, die kraft des Hineindrückens aufgehoben und weiter gedreht bis der Stift durch die kraft der Feder **66** in der Sacknut **74** einrastet. Die kupplungsglieder **57** und **63** sind jetzt gegen selbsttätiges Auseinanderdrehen gesichert.

Anstelle den Verriegelungsstift **55** in das Sackloch **61** als Verdrehsicherung der beiden kupplungsglieder **57** und **63** eingreifen zu lassen, kann auch z. B. der Innengewindebereiche **27a** koaxial über seine kante D hinaus vergrößert werden und in diesen vergrößerten Rand ein zum Verriegelungsstift **55** analoger nicht dargestellter Verriegelungsstift eingesetzt werden. Bei fluiddichter Verbindung der beiden kupplungsglieder **3** und **5** wird der Verriegelungsstift dann radial eingedrückt; das untere Drittel seines Bolzens **56** liegt dann an der Fläche **16b** an, wodurch die beiden kupplungsglieder **3** und **5** gegen selbsttätiges Aufdrehen verriegelt sind. Die eigene Verriegelung des Verriegelungsstiftes erfolgt wie oben bereits erwähnt.

Die für das einwandfreie Zusammenstecken verwendete Führungsbohrung **33** und der Ansatz **21** können auch als koaxiale Teilnut und koaxialer Teilring bzw. Teilnuten und Teilringe ausgebildet sein, welche nur in einer bestimmten Winkelposition der kupplungsglieder zueinander ineinandersteckbar sind.

In diesem Fall können die beiden Flächen **16a** und **16b** als zueinander parallele Flächen ausgebildet werden. Anstelle von zwei Flächen können auch drei oder mehr Flächen verwendet werden. Das kupplungsglied **3** hat dann einen dreieckigen oder viereckigen Außengewindebereich und das kupplungsglied **5** drei bzw. vier Innengewindebereiche. Die für eine fluiddichte Verbindung notwendige Verdrehung reduziert sich hierdurch auf etwa 60° bzw. 45°. Von einer größeren Anzahl von Gewindebereichen ist abzusehen, da der Fertigungsaufwand zunimmt, die Gewindesteigung erhöht werden muß und die Anfälligkeit gegen mechanische Beschädigung der kupplungsglieder zunimmt.

Bei exakt ebenen und zueinander parallel liegendem Gewindeboden **31** und Gewindestirnfläche **51** kann auf den Dichtring **37** verzichtet werden und eine sog. metallische Abdichtung erreicht werden. Das Gewindespiel der beiden kupplungsglieder nimmt dann die Teilumdrehung auf.

Anstelle die kupplung **1** zum fluiddichten Verbinden von zwei Schläuchen **11a** und **11b** zu verwenden, kann man sie auch, wie in **Figur** **7** dargestellt. geringfügig verändert als Befestigungsschraube **81** zur Befestigung z. B. eines Abdeckbleches **83** an einem Gehäuse **85** verwenden. Die Befestigungsschraube **81** ist ähnlich zum Stecker **2** und ein die Befestigungsschraube **81** aufnehmendes Gegenstück **87** ähnlich zum Umfangsteil **6** ausgebildet. Das Gegenstück **87** ist in das Gehäuse **85** eingepreßt. Als Führung auf dem letzten Teil des Zusammensteckweges können Elemente analog zum Ansatz **21** und zur Führungsbohrung **33** verwendet werden. Bevorzugt wird man jedoch, wie in **Figur** **7** dargestellt, einen Führungsschaft **89** unmittelbar unterhalb des Schraubenkopfes **90** der Befestigungsschraube **81** und eine Führungsöffnung **91** mit Spielpassung am Eingang des Gegen stückes **87** verwenden. Die Wandung **93** der Führungsöffnung **91** verbindet den oberen Teil der gewindefreien Bereiche des Gegenstückes **87**; im unteren Teil des Gegenstückes **87** sind die gewindefreien Teile durch das Ende des Gegenstückes verbunden; siehe gestrichelte Linie in **Figur** **7**.

Zwischen Abdeckblech **83** und Schraubenkopf **90** liegt als Sicherungselement **95** eine federnde Zahnscheibe oder ein Federring gegen selbsttätiges Herausdrehen der Befestigungsschraube **81** aus dem Gegenstück **87**. Da Dicke des Abdeckbleches **83** sowie auch die Dicke des Sicherungselements **95** unterschiedlich sind, werden die gefrästen Flächen von Befestigungsschraube **81** und Gegenstück **87** analog zu den Flächen **16a** und **16b**, jedoch bevorzugt als zwei zueinander parallel Flächen hergestellt. Die Elastizität des Sicherungselements **96** ist im Zusammenhang mit der Gewindesteigung derart gewählt, daß zwischen ungepreßtem und gepreßten Zustand annähernd eine Viertelumdrehung der Befestigungsschraube **81** ausreicht. Das sicherungselement **95** wirkt als Anschlag.

Die Befestigungsschraube **81** läßt sich mit dem Gegenstück **87** für alle rasch auszuführenden Befestigungsarten verwenden.

Bei der Verwendung der beiden Kupplungsglieder als Befestigungselement kann das Steckergewinde des Kupplungsgliedes **3** und das Buchsengewinde des Kupplungsgliedes **5** auch als entartetes Gewinde mit der Gewindesteigung Null ausgebildet werden. Das Steckergewinde ist dann in mindestens ein Ringstegelement verwandelt worden und das Buchsengewinde in zu den Ringsegmenten passenden Ringnutsegmenten. Durch die fehlende Gewindesteigung kann kein Gegeneinanderpressen der beiden Kupplungshälften mehr erfolgen. An der Stirnseite des Steckers ist analog zum Kupplungsglied **3** ein koaxialer Ansatz zu Führung in einer hierzu passenden Führungsbohrung in der Buchse analog zum kupplungsglied **5** angeordnet.

Werden diese kupplungsglieder jedoch z. B. als Verbindungselemente für Z. B. annähernd senkrecht stehende Stangen in einer Bodenhalterung verwendet, so ist das fehlende Festziehen nicht störend. In diesem Beispiel wären z. B. die Ringstegsegmente an der Stange angeordnet und die hierzu passenden Ringnutsegmente in einer hierzu passenden Öffnung der Bodenhalterungen. Zur Befestigung wird die Stange in die Bodenhalterung gesteckt, wobei der koaxiale Ansatz in der Führungsbohrung gleitet. Steht die Stirnfläche des Steckers (analog zu **51**) Auf dem Buchsenboden auf, wird die Stande um eine Teilumdrehung entsprechend des freien Mantellängsbereiches gedreht und eine entsprechend der Hülse **47** ausgebildete Hüle über die kupplungsglieder als Verdrehsicherung geschoben.

## Patentansprüche

1. Kupplung **(1)** zum- Verbinden von Bauelementen mit zwei ineinandersteckbaren und durch eine Drehung formschlüssig miteinander verbindbaren Kupplungsgliedern **(3, 5),** **gekenn****zeichnet durch**
eine über die miteinander verbundenen Kupplungsglieder **(3, 5)** verschiebbare Hülse **(47)** mit wenigstens einem nicht kreiszylindrischen, wenigstens teilweise parallel zur Kupplungsachse **(17)** verlaufenden Innenmantellängsflächenbereich, und durch
wenigstens eine nicht kreiszylindrische, im zusammengekuppelten Zustand wenigstens teilweise parallel zur Kupplungsachse **(17)** verlaufende, dem Innenmantellängsflächenbereich der Hülse **(47)** angepaßte Außenkonturfläche **(16a, 16b)** jedes Kupplungsgliedes **(3, 5)**, welche
sich in das andere Kupplungsglied **(3, 5)** derart fortsetzt, daß
die Hülse über die zusammengekuppelten Kupplungsglieder schiebbar ist und deren Aufdrehen verunmöglicht.

2. Kupplung **(1)** zum Verbinden von Bauelementen mit zwei ineinandersteckbaren und durch eine Drehung formschlüssig miteinander verbindbaren Kupplungsgliedern, wobei das eine Kupplungsglied eine Gewindebuchse mit mindestens einem gewindefreien Innenmantellängsbereich und das andere Kupplungsglied einen in die Gewindebuchse einsteckbaren, mindestens einen gewindefreien Außenmantellängsbereich aufweisenden Gewindestecker hat, **dadurch gekennzeichnet,** daß
beide Kupplungsglieder **(3, 5)** Führungselemente **(21, 33)** mit einem Anschlag **(31, 37, 51)** haben, welche die beiden Kupplungsglieder **(3, 5)** wenigstens auf einem letzten Teil des Zusammensteckweges bis zum Anschlag **(31, 37, 51)** derart führen, daß
am Anschlag **(31, 37, 51)** die Gewindebereiche des Außen- und Innengewindes **(13a, 13b; 27a, 27b)** in einer Eingriffslage liegen.

3. Kupplung **(1)** nach Anspruch 2, **gekennzeichnet durch**
eine über die miteinander verbundenen Kupplungsglieder **(3, 5)** verschiebbare Hülse **(47)** mit wenigstens einem nicht kreiszylindrischen, wenigstens teilweise parallel zur Kupplungsachse **(17)** verlaufenden Innenmantellängsflächenbereich, und durch
wenigstens eine nicht kreiszylindrische, im zusammengekuppelten Zustand wenigstens teilweise parallel zur Kupplungsachse **(17)** verlaufende, dem Innenmantellängsflächenbereich der Hülse **(47)** angepaßte Außenkonturfläche **(16a, 16b)** jedes Kupplungsgliedes **(3, 5)**, welche sich in das andere Kupplungsglied **(3, 5)** derart fortsetzt, daß
die Hülse über die zusammengekuppelten Kupplungsglieder schiebbar ist und deren Aufdrehen verunmöglicht.

4. Kupplung **(1)** nach Anspruch 2 oder 3, **dadurch ge****kennzeichnet,** daß
das Führungselement (21, 33) am einen Kupplungsglied **(3)** als zentrischer Führungsbolzen **(21)** und das Führungselement am anderen Kupplungsglied **(5)** als dem Führungsbolzen **(21)** angepaßte zentrische Bohrungswandung **(33)** ausgebildet ist.

5. Kupplung **(1)** nach Anspruch 4, **dadurch gekennzeichnet,** daß
die Stirnfläche **(51)** des Führungsbolzens **(21)** als Anschlag auf der Bodenfläche **(31)** der Bohrung **(33)** wirkt.

6. Kupplung **(1)** nach Anspruch 2 oder 3, **dadurch gekennzeich****net,** daß
die Führungselemente **(21, 33)** oder die Gewindebereiche **(13a, 13b, 27a, 27b)** derart ausgebildet sind, daß ein Zusammenstecken beider Kupplungsglieder **(3, 5)** in axialer Lage nur unter einem vorgegebenen gegenseitigen Winkel möglich ist.

7. Kupplung **(1)** nach Anspruch 1 oder 3, **dadurch gekennzeich****net,** daß
die Hülse an dem einen Kupplungsglied drehfest gelagert und durch eine Feder **(45)** gegen dessen vorderen, an das andere Kupplungsglied anschließende Teil derart andrückbar ist, daß
sie im zusammengekoppelten Zustand teilweise über das andere Kupplungsglied **(5; 3)** durch die Kraft der Feder **(45)** axial geschoben wird und
während des Zusammensteckens und Verdrehens der beiden Kupplungsglieder **(3, 5)** gegen die Kraft der Feder **(45)** nach hinten ziehbar ist.

8. Kupplung (1) nach einem der Ansprüche 1 bis 7, **dadurch ge****kennzeichnet,** daß
das eine Kupplungsglied **(3)** an seiner vorderen Steckerstirnfläche **(51)** oder das andere Kupplungsglied **(5)** im Boden **(31)** seines Buchsenteils **(6)**, bevorzugt in einer zur Achse **(17)** der Kupplung **(1)** koaxialen Ringnut **(35)**, einen elastischen Dichtring **(37)** hat, welcher im zusammengekoppelten Zustand der Kupplung **(1)** gegen den Boden **(31)** und die Stirnfläche **(51)** des jeweiligen Kupplungsgliedes **(3, 5)** fluiddicht drückt.

9. Kupplung **(1)** nach Anspruch 2 oder 3, **dadurch gekennzeich****net,** daß
das Gewindeprofil des Gewindesteckers **(13a, 13b)** sowie der Innengewindebereiche **(27a, 27b)** der Gewindebuchse ein einziges sich fortsetzendes Gewinde mit mindestens einem umlaufenden Gewindezahn bzw. Gewindetal ist, und daß
das Außen- und Innengewinde der Gewindebereiche **(13a, 13b,** **27a, 27b)** ein Gewinde gleichen Typs, gleicher Nennweite, gleicher Steigung und gleicher Gängigkeit ist.

10. Kupplung **(1)** nach Anspruch 2, **dadurch gekennzeichnet,** daß
eines der Kupplungsglieder **(3; 5)** einen durch eine Feder **(66)** belasteten, annähernd radial angeordneten Verriegelungsstift **(55)** und
das andere Kupplungsglied **(5; 3)** eine dem Verriegelungsstift **(55)** bis auf eine Toleranz angepaßte Öffnung **(61)** oder eine Anschlagfläche hat,
in die bzw. an die der Verriegelungsstift **(55)** im zusammengekoppelten Zustand der Kupplung **(1)** greift, um
ein Auseinanderdrehen der beiden Kupplungsglieder **(3, 5)** zu verunmöglichen, und
aus der bzw. von der er zum Öffnen der Kupplung durch die Kraft der Feder **(66)** heraus- bzw. wegziehbar ist.

11. Kupplung nach Anspruch 2 oder 3, **dadurch gekennzeichnet,** daß
das Gewindeprofil des Gewindesteckers sowie der Gewindebuchse als entartetes Gewinde mit der Gewindesteigung Null ausgebildet ist, wobei
mindestens ein Ringsegment und ein hierzu passendes Ringnutsegment auf der Gewindebuchse sowie dem Gewindestecker vorhanden ist.

## Claims

1. Coupling (1) for connecting construction elements having two coupling members (3, 5) which can be plugged into one another and connected to one another in a form-locking manner by means of a rotation, characterised by
a sleeve (47) which can be pushed over the coupling members (3, 5) which are connected to one another, and which has at least one inner longitudinal generated surface area that is not circular-cylindrical and which extends at least partially parallel to the coupling axis (17); and by
at least one external contour surface (16a, 16b) of each coupling member (3, 5), which external contour surface is not circular-cylindrical, which extends, in the coupled state, at least partially parallel to the coupling axis (17), which is adapted to fit to the inner longitudinal generated surface of the sleeve (47) and which
extends into the other coupling member (3, 5) in such a manner that
the sleeve can be pushed over the coupling members in the coupled state and prevents them from becoming unscrewed.

2. Coupling (1) for connecting construction elements having two coupling members which can be plugged into one another and connected to one another in a form locking manner by means of a rotation, wherein the one coupling member has a threaded socket with at least one inner longitudinal casing area that has no thread, and the other coupling member has a threaded plug, which can be plugged into the threaded socket and has at least one external longitudinal casing surface area that has no thread, characterised in that
both coupling members (3, 5) have guide elements (21, 23) with an abutment stop (31, 37, 51), which
guide the two coupling members (3, 5) at least on a final part of the plug-in distance up to the abutment stop (31, 37, 51) in such a manner that
at the abutment stop (31, 37, 51) the threaded areas of the outer and inner threads (13a, 13b; 27a, 27b) are in an engaged position.

3. Coupling (1) according to Claim 2, characterised by
a sleeve (47) which can be pushed over the coupling members (3, 5) which are connected to one another and has at least one inner longitudinal generated surface which is not circular cylindrical and extends at least partially parallel to the coupling axis (17); and by
at least one external contour surface (16a, 16b) of each coupling member (3, 5), which external contour surface is not circular-cylindrical, which extends, in the coupled state, at least partially parallel to the coupling axis (17), which is adapted to fit to the inner longitudinal generated surface area of the sleeve (47), and which
extends into the other coupling member (3, 5) in such a manner that
the sleeve can be pushed over the coupled coupling members and prevent them from becoming unscrewed.

4. Coupling (1) according to Claim 2 or Claim 3, characterised in that
the guide element (21, 33) on one coupling member (3) is formed as a central guide pin (21) and the guide element on the other coupling member (5) is formed as a central bore wall (33) adapted to the guide pin (21).

5. Coupling (1) according to Claim 4, characterised in that
the front end face (51) of the guide pin (21) acts as an abutment stop on the base surface (31) of the bore (33).

6. Coupling (1) according to Claim 2 or Claim 3, characterised in that
the guide elements (21, 33) or the threaded areas (13a, 13b, 27a, 27b) are formed in such a manner that the two coupling members (3, 5) can only be plugged together in an axial position if they are at a predetermined angle relative to one another.

7. Coupling (1) according to Claim 1 or Claim 3, characterised in that
the sleeve is mounted on the one coupling member in a manner secure against rotation and
can be pressed by means of a spring (45) against the front part thereof which is connected to the other coupling member in such a manner
that in the coupled state it is pushed axially over the other coupling member (5; 3) by the force of the spring (45); and
it can be pulled rearwards against the force of the spring (45) when the two coupling members (3, 5) are plugged into one another and rotated.

8. Coupling (1) according to any one of Claims 1 to 7, characterised in that
one coupling member (3) has a resilient sealing ring (37) on its front end plug face (51) or the other coupling member (5) has a resilient sealing ring (37) in the base (31) of its socket part (6) preferably in an annular groove (35) which is coaxial to the axis (17) of the coupling (1), which resilient sealing ring presses in a fluidtight manner against the base (31) and the front end (51) of the coupling member (3, 5) in each case when the coupling (1) is in the coupled state.

9. Coupling (1) according to Claim 2 or Claim 3, characterised in that, in the same manner as the inner threaded areas (27a, 27b) of the threaded socket, the threaded profile of the threaded plug (13a, 13b) is a single continuous thread with at least one peripheral thread tooth or thread trough; and in that
the external and internal threads of these threaded areas (13a, 13b, 27a, 27b) are threads of the same type, having the same nominal width, the same gradient and the same direction of spiral.

10. Coupling (1) according to Claim 2, characterised in that one of the coupling members (3, 5) has a locking pin (55) which is loaded by means of a spring (66) and is arranged approximately radially; and
the other coupling member (5, 3) has an aperture (61) or an abutment surface which is adapted to fit the locking pin (55) up to a certain tolerance,
in which or on which the locking pin (55) engages when the coupling (1) is in the coupled state, in order to prevent the two coupling members (3, 5) from becoming unscrewed; and
away from or out of which it may be drawn by the force of the spring (66) to open the coupling.

11. Coupling according to Claim 2 or Claim 3, characterised in that
the threaded profile of the threaded plug is, like the threaded socket, a thread that deviates from type and is formed with a thread increase of nil, wherein
at least one annular segment and an annular groove segment adapted to fit thereto is provided both on the thread socket and on the thread plug.

## Revendications

1. Accouplement (1) pour relier des éléments structurels, présentant deux organes d'accouplement (3, 5) emboîtables l'un dans l'autre et pouvant être solidarisés, par concordance de formes, en accomplissant une rotation, caractérisé par
une douille (47) pouvant coulisser sur les organes d'accouplement (3, 5) reliés l'un à l'autre, et munie d'au moins une région superficielle longitudinale d'enveloppe interne, de forme autre que cylindrique droite et s'étendant au moins en partie parallèlement à l'axe (17) de l'accouplement, et par
au moins une surface de configuration externe (16a, 16b) de chaque organe d'accouplement (3, 5), qui présente une forme autre que cylindrique droite, s'étend, à l'état accouplé, au moins en partie parallèlement à l'axe (17) de l'accouplement, est adaptée à la région superficielle longitudinale d'enveloppe interne de la douille (47) et
se prolonge dans l'autre organe d'accouplement (3, 5) de telle sorte que
la douille puisse coulisser sur les organes d'accouplement accouplés, et interdise leur ouverture par rotation.

2. Accouplement (1) pour relier des éléments structurels, présentant deux organes d'accouplement emboîtables l'un dans l'autre et pouvant être solidarisés, par concordance de formes, en accomplissant une rotation, l'un des organes d'accouplement comportant une douille taraudée munie d'au moins une région longitudinale d'enveloppe interne, exempte de filetage, et l'autre organe d'accouplement comportant une partie filetée emboîtable qui peut être emboîtée dans la douille taraudée, et possède au moins une région longitudinale d'enveloppe externe exempte de filetage, caractérisé par le fait que
les deux organes d'accouplement (3, 5) comportent des éléments de guidage (21, 33) qui sont pourvus d'une butée (31, 37, 51) et qui
guident les deux organes d'accouplement (3, 5) jusqu'à la butée (31, 37, 51), au moins sur une dernière partie de la course de solidarisation emboîtée, de façon que
les zones filetées des filetages extérieurs et intérieurs (13a, 13b ; 27a, 27b) occupent une position de venue en prise sur la butée (31, 37, 51).

3. Accouplement (1) selon la revendication 2, caractérisé par
une douille (47) pouvant coulisser sur les organes d'accouplement (3, 5) reliés l'un à l'autre, et munie d'au moins une région superficielle longitudinale d'enveloppe interne, de forme autre que cylindrique droite et s'étendant au moins en partie parallélement à l'axe (17) de l'accouplement, et par
au moins une surface de configuration externe (16a, 16b) de chaque organe d'accouplement (3, 5), qui présente une forme autre que cylindrique droite, s'étend, à l'état accouplé, au moins en partie parallèlement à l'axe (17) de l'accouplement, est adaptée à la région superficielle longitudinale d'enveloppe interne de la douille (47) et
se prolonge dans l'autre organe d'accouplement (3, 5) de telle sorte que
la douille puisse coulisser sur les organes d'accouplement accouplés, et interdise leur ouverture par rotation.

4. Accouplement (1) selon la revendication 2 ou 3, caractérisé par le fait que
l'élément de guidage (21, 33) situé sur l'un (3) des organes d'accouplement est réalisé sous la forme d'un tenon central de guidage (21), et l'élément de guidage situé sur l'autre organe d'accouplement (5) est réalisé en tant que paroi d'un perçage central (33), adaptée au tenon de guidage (21).

5. Accouplement (1) selon la revendication 4, caractérisé par le fait que
la face extrême (51) du tenon de guidage (21) agit comme une butée sur la surface de fond (31) du perçage (33).

6. Accouplement (1) selon la revendication 2 ou 3, caractérisé par le fait que
les éléments de guidage (21, 33) ou les zones filetées (13a, 13b, 27a, 27b) sont réalisé(e)s de telle sorte qu'une solidarisation emboîtée des deux organes d'accouplement (3, 5), dans une position axiale, soit possible uniquement avec inclinaison mutuelle préétablie.

7. Accouplement (1) selon la revendication 1 ou 3, caractérisé par le fait que
la douille est montée avec verrouillage rotatif sur l'un des organes d'accouplement et
peut être pressée par l'intermédiaire d'un ressort (45), contre la partie antérieure dudit organe qui se rattache à l'autre organe d'accouplement, de telle sorte que,
à l'état accouplé, elle soit poussée en partie axialement sur l'autre organe d'accouplement (5 ; 3), par la force du ressort (45), et que,
au cours de la solidarisation par emboîtement et de la rotation des deux organes d'accouplement (3, 5), elle puisse être tirée vers l'arrière en s'opposant à la force du ressort (45).

8. Accouplement (1) selon l'une des revendications 1 à 7, caractérisé par le fait que
l'un (3) des organes d'accouplement et l'autre organe d'accouplement (5) présente respectivement, sur la face extrême antérieure (51) de sa partie emboîtable ou dans le fond (31) de sa partie femelle (6), de préférence dans une gorge annulaire (35) coïncidant avec l'axe (17) de l'accouplement (1), une bague élastique d'étanchement (37) qui, à l'état accouplé de l'accouplement (1), exerce une pression de manière étanche aux fluides contre le fond (31) et la face extrême (51) de l'organe d'accouplement considéré (3, 5).

9. Accouplement (1) selon la revendication 2 ou 3, caractérisé par le fait que
le profil du filetage de la partie filetée emboîtable (13a, 13b), ainsi que des zones filetées intérieures (27a, 27b) de la douille taraudée, est un filetage unique se prolongeant, respectivement, par au moins une crête ou un creux de filet périphérique ; et par le fait que
les filetages extérieurs et intérieurs des zones filetées (13a, 13b, 27a, 27b) sont un filetage de même type, de même diamètre nominal, de même pas et de même sens de pas.

10. Accouplement (1) selon la revendication 2, caractérisé par le fait que
l'un des organes d'accouplement (3 ; 5) présente un pointeau de verrouillage (55) chargé par un ressort (66) et occupant une position approximativement radiale, et
l'autre organe d'accouplement (5 ; 3) présente une ouverture (61) ou une surface de butée qui est adaptée au pointeau de verrouillage (55), en tenant compte d'une tolérance, dans ou contre laquelle le pointeau de verrouillage (55) vient en prise, à l'état accouplé de l'accouplement (1), de manière à
interdire une dissociation des deux organes d'accouplement (3, 5) par rotation, et
hors ou à l'écart de laquelle ledit pointeau peut être extrait, par la force du ressort (66), en vue d'ouvrir l'accouplement.

11. Accouplement selon la revendication 2 ou 3, caractérisé par le fait que
le profil du filetage de la partie filetée emboîtable, ainsi que de la douille taraudée, est conçu en tant que filetage dégénéré dont le pas est égal à zéro,
au moins un segment annulaire, et un segment de gorge annulaire s'adaptant à ce dernier, étant présents sur la douille taraudée ainsi que sur la partie filetée emboîtable.
